# EUROPEAN PATENT APPLICATION

(11) **EP 4 732 662 A1**
(43) Date of publication of application: **29.04.2026**
(21) Application number: 25198692.3
(22) Date of filing: 28.08.2025
(51) Int. Cl.: A01G 20/12, A01G 20/20

(54) **HYBRID GRASS TURF HARVESTING MACHINE AND METHOD**

(30) Priority: 25.10.2024 GB 202415798
(71) Applicant: County Turf Sports Limited, Scunthorpe DN15 0DF (GB)
(72) Inventor: MEDLEY, Christopher David Ellis, SCUNTHORPE, DN15 0DF (GB)
(74) Representative: Loven, Keith James

(57) **Abstract**

A harvesting machine for harvesting hybrid turf, comprises a wheeled vehicle mounting a horizontal cutting blade (2) located between two vertical cutting discs for separating a web (3) of the hybrid turf from a growing surface, and conveying means (6, 9 )for conveying the web over a plurality of scraping rotors (5, 7 and 8) extending transversely beneath the web to a turf receiving area, the rotors having at least one scraping blade (5b), the rotors each being rotated such that the scraping blade moves over the underside of the web in the direction of movement of the web at a speed greater than the speed of movement of the web.

## Description

### Field of the Invention

The invention relates to a harvesting machine and method for harvesting hybrid grass turf.

### Background to the Invention

Sports playing surfaces, for example for soccer or rugby, have very specific requirements to enable them to withstand wear and allow good drainage so that there is no accumulation of surface water. Artificial grass surfaces have been proposed to meet these requirements, but are environmentally undesirable and can lead to friction injuries to players, in use. For these reasons, a natural grass surface is usually preferred.

To seek to enhance the durability of natural grass surfaces, while retaining the playing characteristics of the surface, it has been proposed to create hybrid turf surfaces which use an artificial grass matrix to support the natural grass. An example of a hybrid turf material is disclosed in WO2017/046648A1. A hybrid turf support material having a net-like structure with grass-like fibres extending upwardly from it and with a biodegradable porous membrane on the opposite face is laid on to a soil growing surface and sand and grass seed spread over it. When the grass has grown sufficiently, the turf is harvested by undercutting the turf, typically by a small distance to facilitate removal of the remains of the membrane, and the turf is then rolled for transport to the location where it is to be laid.

To achieve a satisfactory playing surface, a substrate is prepared and levelled, and the turf is then unrolled on to the surface. The grass then sends out roots into the substrate to provide the grass with water and nutrients and the roots also serve to anchor the turf to the surface. The substrate is constructed so that rainwater can drain through the turf and the substrate sufficiently quickly to ensure that the turf does not become saturated, which would degrade the playing characteristics of the surface. Typically, this will involve careful control of particle sizes in the substrate to avoid the risk of the interstices between the particles becoming clogged and thereby preventing proper drainage from happening. It is important, therefore, to ensure that the turf that is laid on the substrate does not carry with it soil from the growing location that might introduce fine particles of clay or silt which would serve to degrade the drainage ability of the playing surface.

While machines for harvesting turf are known, for example from US2998081 and US3807504, such machines were not designed for harvesting turf for sports playing surfaces and therefore did not address the problem of contamination of the new location of the turf by residual soil.

In order to try to clean the turf as it is lifted from the growing location, it has been proposed to provide the harvesting machine with a conveyor surface between the cutting blade and the surface on which the web is rolled up, the surface being moved at a higher speed than the forward motion of the cutting blade to scour some of the soil from the underside of web as it passes over. Although this has proved sufficient to remove some of the soil, it has been found that some can still remain, to be transferred on to the playing surface substrate, in use.

### Summary of the Invention

The present invention provides a harvesting machine for harvesting hybrid turf, comprising a wheeled vehicle mounting a horizontal cutting blade located between two vertical cutting discs for separating a web of the hybrid turf from a growing surface, and conveying means for conveying the web over a plurality of scraping rotors extending transversely beneath the web to a turf receiving area, the rotors having at least one scraping blade, the rotors each being rotated such that the scraping blade moves over the underside of the web in the direction of movement of the web at a speed greater than the speed of movement of the web.

Preferably, each rotor is rotated at different speed from the other rotor or rotors.

The vehicle may mount a first horizontal scraping rotor extending laterally of the vehicle adjacent to the cutting blade whereby the separated web passes over the first horizontal scraping rotor and on to a first conveyor for conveying the web from the first horizontal scraping rotor to a second horizontal scraping rotor, wherein each rotor is provided with a drive mechanism configured to rotate the rotor, and the vehicle mounting a second conveyor for conveying the web from the second horizontal scraping rotor to the turf receiving area.

Each scraping rotor is preferably configured with a plurality of blades spaced circumferentially around a central shaft and each describing a helical path. The horizontal scraping rotors may be mounted on the vehicle such that material scraped from the underside of the web can fall back on to the ground beneath the vehicle.

The invention also provides a method of harvesting hybrid turf, comprising passing a cutting blade through the ground beneath the turf to separate a web of the hybrid turf from a growing surface, lifting the web over a horizontal scraping rotor having at least one scraping blade extending therealong, while rotating the rotor at a speed such that the or each blade passes over the underside of the web at a speed greater than the speed of the web, conveying the web over a second horizontal scraping rotor having at least one scraping blade extending therealong, while rotating the second rotor at a slower speed than that of the first rotor, and conveying the web for delivery to a turf receiving area.

Other features of the invention are set out in the claims.

The turf harvester of the invention can deliver hybrid turf free from contaminants that might adversely affect drainage of a sports playing surface.

### Brief Description of the Drawings

In the drawings, which represent one embodiment of the machine of the invention:
Figure 1 is a diagrammatic side view of the main elements of the turf harvesting machine; and
Figure 2 is a perspective view from above and to one side of a part of the machine.

### Detailed Description of the Illustrated Embodiment

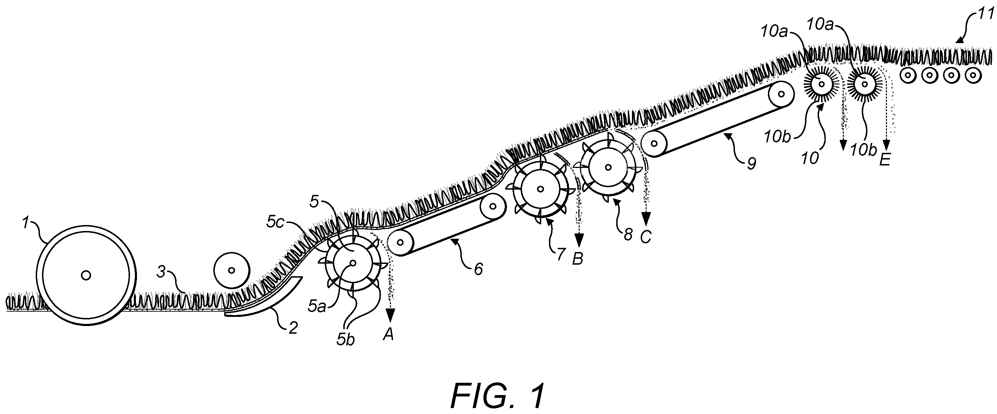

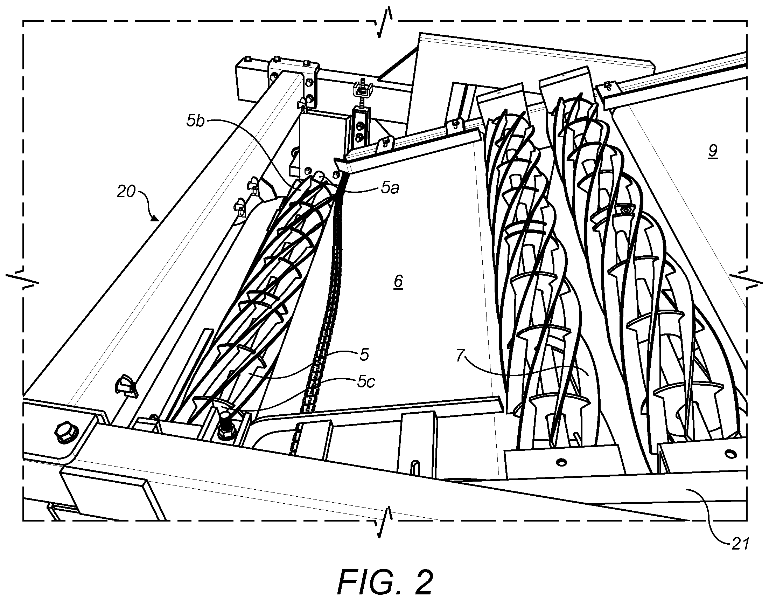

In Figure 1, the supporting parts of the machine are omitted for the sake of clarity, but are shown in Figure 2 and described hereinafter. At the forward end of the machine, to the left of the Figure, a vertical cutting disc 1 is mounted on each side of a frame connected to a towing vehicle such as a tractor and supported to the rear on wheels. The cutting discs 1 serve to cut the sides of a web of turf to be lifted. A conventional turf cutting unit, for example as supplied by Hallmarket Ltd in its Big Roll Harvester, is mounted behind the discs and includes an angled and curved transverse cutting blade 2 which is driven beneath the turf on the ground to sever any roots growing downwards from the supporting mesh layer of the hybrid turf. The cutting blade 2 lifts the turf web 3 and guides it upwardly and rearwardly with the assistance of a roller 4 above the turf. The web 3 moves up and over a first scraping rotor 5 which consists of a central axle 5a around which is mounted a plurality of helically curved blades 5b (Figure 2) carried by disc-like supports 5c spaced along the axle 5a. The rotor 5 thus has an open structure allowing material scraped from the underside of the web to fall through the rotor and on to the ground beneath the machine. The axle 5a of the rotor 5 is driven by a hydraulic motor at one end (not shown) at a speed such that the blades 5b pass over the underside of the web at a linear speed approximately ten times that of the rearward movement of the web 3. Typically, the harvesting machine will travel over the ground at from 1 km/hr to 2.5 km/hr, so the harvested web will move rearwardly through the machine at approximately 0.28 to 0.69 m/s.

A first belt conveyor 6 is located on the machine to the rear of the first scraping rotor 5, with a space between the rotor and the belt to allow material scraped from the underside of the web 3 to drop to the ground as indicated by the arrow A. The conveyor 6 is angled upwardly to carry the turf web 3 towards a second scraping rotor 7 which is essentially identical to the first rotor 5 and which is mounted to the rear of the conveyor and slightly higher than the conveyor 6. The second rotor 7 is driven at a slower speed than first rotor 5, for example at or just above ground speed.

A third scraping rotor 8 is mounted adjacent to the second rotor 7, with a space between the two rotors to allow any scraped material to fall to the ground, as indicated by arrow B, and with the third rotor 8 slightly above the second rotor 7 to continue the upward direction of movement of the web 3. The third rotor 8 is again essentially identical to the first rotor 5 and is driven at a faster speed than the second rotor 7, such that the blades of the rotor pass over the underside of the web at a linear speed approximately two times up to ten times that of the rearward movement of the web 3.

A second belt conveyor 9 is mounted in the frame of the machine to the rear of the third rotor 8, again with a space between the rotor 8 and the conveyor 9 to allow any further materials scraped off the underside of the web 3 to fall to the ground, as indicated by arrow C. The second conveyor 9 is aligned with the first conveyor 6, whereby the two rotors 7 and 8 extend above the plane of the conveyors 6 and 9.

Typically, the hybrid turf is cut at a depth of 5-10mm below the supporting net or matrix to ensure that any of the remaining porous membrane underlying the net does not accumulate on the cutting blade and interfere with its action. However, in order to ensure that the grass creates new root growth after the turf is laid on the playing surface, with the roots extending into the playing surface substrate to anchor the turf and to obtain water and nutrients, it is desirable to trim off root growth below the net before the turf is laid. The actions of the scraping rotors may be sufficient to achieve this, and to remove any adhering soil from the growing surface, where the turf is relatively young, with the roots not having penetrated too deeply into the soil. However, where the turf is more mature, and therefore the roots are longer and more developed, there is a possibility that there will still be some areas beneath the turf web where some soil may remain. To ensure full removal of this residual soil, to leave the turf substantially free of soil and therefore the risk of contamination of the playing surface substrate, a pair of rotatable cylindrical brushes 10, driven by a hydraulic motor, is mounted between the second conveyor 9 and a turf receiving area 11, where the turf web is rolled up, typically with a protective membrane between adjacent layers of the turf. The cylindrical brushes 10 each comprise a horizontally-extending shaft 10a with a plurality of plastic bristles 10b extending radially outwardly therefrom. The bristles 10b are suitably of a stiffness such that they do not bend significantly when passing over the underside of the web. While it is preferred to use a pair of spaced apart brushes to ensure that no residual soil adheres to the underside of the turf web 3, a single brush 10 may be sufficient for many uses. Again, spaces are provided between the brushes and between the second brush 10 and the start of the turf receiving area 11 to allow any material brushed off the underside of the web 3 to fall to the ground, as indicated by arrows D and E. The brushes 10 are rotated in the same direction as the direction of travel of the web, but at a speed in excess of that of the web. The speed of rotation will depend on the moisture in the turf and the age of the turf, but will typically be in the range of at or just above ground speed, up to 20 times ground speed, depending on the condition of the turf web. Turf is typically harvested at 3 months to one year after sowing, and moisture is ideally kept at about 10-30%, but if the turf is more wet more vigorous brushing is required. Each brush is provided with a respective independent hydraulic drive motor, so that they can be driven at different speeds.

As illustrated in Figure 2, the machine includes a supporting frame 20, which extends generally horizontally from a towing connection to a tractor vehicle (not shown) to a rear section below the turf receiving area 11 (Figure 1). The first rotor 5 is mounted from the frame 20, while the second and third rotors 7 and 8 and the conveyors 6 and 9 are mounted between elements of an angled frame 21 which in turn is mounted on the supporting frame 20, which also carries the turf cutting unit.

The hydraulic motors driving the rotors 5, 7 and 8, the conveyors 6 and 9, and the bushes 10 are supplied with hydraulic fluid from a pump mounted on the vehicle and driven by the power take-off shaft of the tractor vehicle and are speed controlled individually by hydraulic adjusters, which may in turn be controlled by a suitably programmed electronic controller.

It will be appreciated that, while the invention has been described with reference to sports playing surfaces, the hybrid turf harvested in accordance with the invention can be used to create high quality grass surfaces for a wide range of uses.

## Claims

1. A harvesting machine for harvesting hybrid turf, comprising a wheeled vehicle mounting a horizontal cutting blade (2) located between two vertical cutting discs for separating a web (3) of the hybrid turf from a growing surface, and conveying means (6, 9) for conveying the web over a plurality of scraping rotors (5, 7 and 8) extending transversely beneath the web to a turf receiving area, the rotors having at least one scraping blade (5b), the rotors each being rotated such that the scraping blade moves over the underside of the web in the direction of movement of the web at a speed greater than the speed of movement of the web.

2. A harvesting machine according to Claim 1, wherein each rotor is rotated at different speed from the other rotor or rotors.

3. A harvesting machine according to Claim 1 or 2, wherein the vehicle mounts a first horizontal scraping rotor (5) extending laterally of the vehicle adjacent to the cutting blade whereby the separated web passes over the first horizontal scraping rotor and on to a first conveyor (6) for conveying the web from the first horizontal scraping rotor (5) to a second horizontal scraping rotor (7), wherein each rotor is provided with a drive mechanism configured to rotate the rotor, and the vehicle mounting a second conveyor (9) for conveying the web from the second horizontal scraping rotor to the turf receiving area (11).

4. A harvesting machine according to Claim 3, wherein the drive mechanism is configured to drive the first horizontal scraping rotor (5) at a rotational speed such that the or each blade passes across the underside of the web at a speed at least two times the speed of movement of the web.

5. A harvesting machine according to Claim 4, wherein the drive mechanism is configured to drive the first horizontal scraping rotor (5) at a rotational speed such that the or each blade passes across the underside of the web at a speed ten times the speed of movement of the web.

6. A harvesting machine according to Claim 4 or 5, wherein the drive mechanism is configured to rotate the second horizontal scraping rotor (7) at a slower speed than the first horizontal scraping rotor (5).

7. A harvesting machine according to any of Claims 3 to 6, wherein the vehicle mounts a third horizontal scraping rotor (8) adjacent to and above the second horizontal scraping rotor (7), the second conveyor receiving the web after passage over the third horizontal scraping rotor.

8. A harvesting machine according to Claim 7, wherein the drive mechanism is configured to drive the third horizontal scraping rotor (8) at a rotational speed faster than that of the second horizontal scraping rotor (7).

9. A harvesting machine according to Claim 8, wherein the drive mechanism is configured to drive the third horizontal scraping rotor (8) at a rotational speed such that the or each blade passes over the underside of the web at two to ten times the speed of movement of the web.

10. A harvesting machine according to any preceding claim, comprising at least one rotatable brush (10) extending across the machine between the second conveyor (9) and the turf receiving area (11) for engagement with the underside of the web.

11. A harvesting machine according to Claim 10, wherein the or each brush (10) comprises a plurality of bristles (10b) extending radially from a central hub (10a) to provide a generally cylindrical configuration, the brush or brushes being provided with a hydraulic drive motor for driving the central hubs.

12. A harvesting machine according to Claim 10 or 11, wherein the or each brush (10) is driven at a speed such that the bristles pass over the underside of the turf web at a linear speed from one to twenty times the linear speed of the web.

13. A harvesting machine according to any preceding claim, wherein the conveying means comprises conveyors (6, 9) extending in a plane at an acute angle to the horizontal, the turf receiving area (11) being elevated relative to the horizontal cutting blade.

14. A method of harvesting hybrid turf, comprising passing a cutting blade through the ground beneath the turf to separate a web of the hybrid turf from a growing surface, lifting the web over a horizontal scraping rotor having at least one scraping blade extending therealong, while rotating the rotor at a speed such that the or each blade passes over the underside of the web at a speed greater than the speed of the web, conveying the web over a second horizontal scraping rotor having at least one scraping blade extending therealong, while rotating the second rotor at a slower speed than that of the first rotor, and conveying the web for delivery to a turf receiving area.

15. A method according to Claim 14, which comprises passing the web over at least one rotating cylindrical brush before delivery to the turf receiving area.
